# EUROPÄISCHE PATENTSCHRIFT

(11) **EP 3 355 753 B1**
(45) Veröffentlichungstag und Bekanntmachung des Hinweises auf die Patenterteilung: **06.05.2020**
(21) Anmeldenummer: 16767158.5
(22) Anmeldetag: 01.09.2016
(51) Int. Cl.: A47K 5/12, G05B 19/00

(54) **VERFAHREN UND SPENDEVORRICHTUNG ZUR AUSGABE EINES VERBRAUCHSMITTELS**
METHOD AND DISPENSING DEVICE FOR DISPENSING A CONSUMABLE
PROCÉDÉ ET DISPOSITIF DE DISTRIBUTION PERMETTANT DE DÉLIVRER UN MOYEN DE CONSOMMATION

(30) Priorität: 30.09.2015 DE 102015218943
(43) Veröffentlichungstag der Anmeldung: 08.08.2018
(73) Patentinhaber: Siemens Mobility GmbH, 81739 München (DE)
(72) Erfinder: SCHLESS, Günther, 46485 Wesel (DE)
(86) Internationale Anmeldenummer: PCT/EP2016/070581
(87) Internationale Veröffentlichungsnummer: WO 2017/055007

(56) Entgegenhaltungen:
- WO-A2-2004/086731
- JP-A- 2007 215 871
- US-A- 6 065 639

## Beschreibung

Die vorliegende Erfindung betrifft ein Verfahren zur Ausgabe eines Verbrauchsmittels sowie eine Spendevorrichtung, bei der die Ausgabe des Verbrauchsmittels nach dem erfindungsgemäßen Verfahren abläuft.

Spendevorrichtungen zur Ausgabe von Verbrauchsmitteln werden typischerweise zur Hygiene benötigt, zum Beispiel als Handwaschmittel, Reinigungsmittel oder als Desinfektionsmittel. Besonders häufige Anwendung haben Spendevorrichtungen in WC-Kabinen, die täglich von einer großen Anzahl von Nutzern frequentiert werden, wie beispielsweise in Schienenfahrzeugen, im Luftverkehr oder in den der Öffentlichkeit zugänglichen WC-Kabinen an Flughäfen, Bahnhöfen, Autobahnraststätten, Restaurants etc. Als Verbrauchsmittel kommt dabei häufig Seife in fester Form, in flüssiger Form oder als Schaum zum Einsatz.

Die Dosierung der Ausgabemenge erfolgt üblicherweise durch eine manuelle Aktivierung einer Aktivierungseinheit an der Spendevorrichtung. Beispielsweise kann eine Aktivierung durch Schwenken eines Betätigungshebels, durch Drücken eines Knopfes oder Drückers oder durch Drehen an einer Betätigungseinheit erfolgen. Alternativ kann die Aktivierung der Ausgabe auch durch eine optische Einrichtung, zum Beispiel mittels eines Sensors, erfolgen, so dass der Vorgang der Aktivierung kontaktlos abläuft. Bei jeder Aktivierung wird eine Pump- und Dosiereinheit angesteuert, die das Verbrauchsmittel über eine Ausgabestelle zum Nutzer befördert. Die ausgegebene Menge wird alleine durch den Nutzer bestimmt. Unverhältnismäßig häufige, missbräuchliche oder ungewollte Aktivierungen werden bisher nicht wirksam verhindert. Negative Konsequenzen sind der daraus folgende erhöhte Verbrauch des Verbrauchsmittels, das missbräuchliche Entwenden des Verbrauchsmittels sowie die Verschmutzung der Räumlichkeiten. Die Folge sind daher unangemessene Betriebs-, Reinigungs- und Wartungskosten. Zudem kann dadurch der Komfort anderer Nutzer gemindert werden.

Die Druckschriften WO 2004/086731 A2, JP 2007 215871 A sowie US 6 065 639 A lehren gattungsgemäße Spendevorrichtungen und Verfahren zur Ausgabe eines Verbrauchsmittels. Die Ausgabe von Verbrauchmaterial kann gesperrt werden, wenn die gemessene Anzahl an Aktivierungen innerhalb eines vorgegebenen Zeitintervalls gleich ist oder größer als eine vorgegeben maximale Anzahl von Aktivierungen innerhalb des vorgegebenen Zeitintervalls.

Die Aufgabe besteht daher darin, ein Verfahren zu entwickeln, dass eine missbräuchliche Bedienung eines Nutzers der Spendevorrichtung verhindert.

Das erfindungsgemäße Verfahren zur Ausgabe eines Verbrauchsmittels aus einer Spendevorrichtung umfasst grundsätzlich die folgenden Schritte. Das Betätigen einer Aktivierungseinheit durch einen Nutzer, das Freischalten einer Ausgabe des Verbrauchsmittels, das Messen einer Anzahl von Aktivierungen sowie das Messen einer Dauer einer ununterbrochenen Ausgabezeit. Erfindungsgemäß wird die Ausgabe eines Verbrauchsmittels an den Nutzer dann gesperrt, falls mindestens eine der folgenden Sperrbedingungen erfüllt ist. Die erste Sperrbedingung ist dann erfüllt, falls eine gemessene Dauer einer ununterbrochenen Ausgabezeit tₘᵤₓ gleich oder größer ist als eine vorgegebene maximale ununterbrochene Ausgabezeit Tₘᵤₓ (tₘᵤₓ≥Tₘᵤₓ). Die zweite Sperrbedingung ist erfüllt, falls die gemessene Anzahl von Aktivierungen n gleich oder größer ist als eine vorgegebene maximale Anzahl von Aktivierungen nₘᵤₓ (n≥nₘᵤₓ).

Das erfindungsgemäße Verfahren hat den Vorteil, dass die Ausgabezeit sowie die Anzahl der Aktivierungen kontrolliert und auf ein anwendungsgerechtes Maß reduziert werden. Eine unangemessene Nutzung wird dabei mit einer Sperrung der Ausgabe des Verbrauchsmittels belegt, wodurch eine Verhinderung von missbräuchlicher Bedienung erzielt wird. Bei der Messung der Zahl der Aktivierungen kann vorzugsweise ein vorgegebenes Zeitintervall festgelegt werden, in dem die Anzahl der Aktivierungen n des Nutzers bestimmt wird und mit der maximalen Anzahl der Aktivierungen nₘᵤₓ bezogen auf dieses Zeitintervall verglichen wird. Alternativ kann auch nur eine der beiden Sperrbedingungen verwendet werden. Bei Auswahl einer vorgegebenen maximalen ununterbrochenen Ausgabezeit Tₘᵤₓ als alleinige Oberschranke wird eine große Ausgabemenge des Verbrauchsmittels an einem Stück verhindert. Bei Auswahl einer vorgegebenen maximalen Anzahl von Aktivierungen nₘᵤₓ als alleinige Oberschranke wird dabei das zu häufige Aktivieren eines Nutzers verhindert. Alternativ kann die Sperrung der Ausgabe auch erst dann erfolgen, wenn sowohl die maximale Anzahl von Aktivierungen nₘᵤₓ als auch die maximale ununterbrochene Ausgabezeit Tₘᵤₓ erreicht bzw. überschritten wird. Die in der Erfindung bevorzugte Strategie zur Verhinderung von missbräuchlicher Bedienung wird daher dadurch erzielt, wenn als Kriterium zum Sperren verwendet wird, dass mindestens eine der beiden Sperrbedingungen erfüllt sein muss, wodurch ein maximaler Schutz entsteht und ein einfaches Umgehen der Sperrung am effektivsten vermieden wird. Das Verfahren mindert ferner die Verschmutzung von Räumlichkeiten mit Verbrauchsmitteln und reduziert dadurch unangemessene Betriebs-, Reinigungs- und Wartungskosten.

Zusätzlich ist das Verfahren vor der Freischaltung zur Ausgabe eines Verbrauchsmittels mit einer Vorbedingung ausgestattet. Diese beinhaltet, dass die Freischaltung nur dann erfolgen kann, falls eine gemessene Dauer für eine ununterbrochene Aktivierung tₘᵤₐ gleich oder größer ist als eine vorgegebene Mindestdauer einer ununterbrochenen Aktivierung Tₘᵤₐ (tₘᵤₐ≥Tₘᵤₐ). Der Vorteil dieser zusätzlichen Bedingung ist, dass eine unbeabsichtigte kurze Aktivierung wie beispielsweise durch ein Insekt nicht zu einer in einem solchen Fall unerwünschten Ausgabe des Verbrauchsmittels führt.

Vorzugsweise wird die Sperrung aufgehoben, falls eine gemessene Sperrzeit der Ausgabe tₙₒₚ gleich oder größer ist als eine vorgegebene Sperrzeit der Ausgabe Tₙₒₚ (tₙₒₚ≥Tₙₒₚ). Der Vorteil ist, dass dadurch ein Nutzer nicht dauerhaft gesperrt wird und der Nutzer nach Ablauf der Sperrzeit der Ausgabe wieder ein Freischalten zur Ausgabe des Verbrauchsmittels erzielen kann. Dadurch wird ein möglicher Beaufsichtigungsaufwand zur Wiederinbetriebnahme im Sperrfall vermieden.

Dem Verfahren zur Ausgabe eines Verbrauchsmittels kann zusätzlich zu den obigen Sperrbedingungen eine weitere Bedingung auferlegt werden. Die Ausgabe des Verbrauchsmittels kann vorzugsweise nur dann gesperrt werden, falls zu den Sperrbedingungen zusätzlich eine gemessene Dauer einer Aktivierung tₘᵢₙ gleich oder größer ist als eine minimale Dauer einer Aktivierung Tₘᵢₙ (tₘᵢₙ≥Tₘᵢₙ). Da eine zu kurze Aktivierung des Nutzers auf Grund von Systemträgheit nicht zu einer effektiven Ausgabe des Verbrauchsmittels führen kann, stellt diese Bedingung sicher, dass eine Aktivierung des Nutzers auch zu einer effektiven Ausgabe des Verbrauchsmittels geführt hat. Insbesondere verhindert dieses Zusatzkriterium vorteilhafterweise den Sonderfall, dass ein Nutzer häufig aktiviert und dabei die maximale Anzahl von Aktivierungen nₘᵤₓ überschreitet, das heißt dabei die Sperrbedingung erfüllen würde, ohne dabei das Verbrauchsmittel je erhalten zu haben.

Ferner kann während der Beendigung der Freischaltung durch eine Nutzererkennung die Nutzeranwesenheit geprüft werden, wobei im Falle einer Erkennung die gemessene Sperrzeit der Ausgabe tₙₒₚ wieder auf null gesetzt wird. Eine Nutzererkennung kann hierbei durch eine optische Überwachungseinheit erfolgen, beispielsweise eine Kamera oder eine Lichtschranke. Der Vorteil liegt darin, dass eine Sperrung über eine längere Zeit als die vorgegebene Sperrzeit Tₙₒₚ der Ausgabe erzielt werden kann.

Vorzugsweise wird die vorgegebene Sperrzeit der Ausgabe Tₙₒₚ im Bereich von 1-100 s eingestellt.

Ferner liegen die vorgegebene maximale ununterbrochene Ausgabezeit Tₘᵤₓ im Bereich von 0,5-5 s und/oder die vorgegebene maximale Zahl der Aktivierungen nₘᵤₓ im Bereich von 3-10.

Vorteilhafterweise wird durch Freischaltung der Ausgabe ein Antrieb für eine Pump- und Dosiereinheit zur Ausgabe eines Verbrauchsmittels über eine Ausgabestelle eingeschaltet und bei Sperrung abgeschaltet. Besonders geeignet ist dieses Verfahren, falls als Aktivierungseinheit ein Sensor verwendet wird, wodurch das Verfahren kontaktlos und vollautomatisch abläuft.

Vorzugsweise kann als Aktivierungseinheit eine mechanische Aktivierungseinheit bereitgestellt werden, die bei Freischaltung eine kraftschlüssige Verbindung zwischen der mechanischen Aktivierungseinheit und einer Pump- und Dosiereinheit zur Ausgabe des Verbrauchsmittels herstellt und die bei Sperrung wieder gelöst wird.

Vorzugsweise kann eine Aktivierungseinheit als eine mechanische Aktivierungseinheit bereitgestellt werden, wobei bei Sperrung ein Blockieren der mechanischen Aktivierungseinheit erfolgt.

Ferner betrifft die Erfindung eine Spendevorrichtung zur Ausgabe eines Verbrauchsmittels. Die Spendevorrichtung umfasst einen Behälter mit einem darin befindlichen Verbrauchsmittel, eine Aktivierungseinheit für den Nutzer,
eine Ausgabestelle, über die das Verbrauchsmittel abgegeben wird sowie eine Pump- und Dosiereinheit, die das Verbrauchsmittel aus dem Behälter über die Ausgabestelle zum Verbraueher befördert. Erfindungsgemäß weist die Spendevorrichtung zur Ausgabe eines Verbrauchsmittels eine nach dem erfindungsgemäßen Verfahren verfahrende elektronische Auswertungseinheit auf, die zur Besteuerung der Pump- und Dosiereinheit zur Verfügung gestellt wird. Die Vorteile der erfindungsgemäßen Spendevorrichtung entsprechen den Vorteilen des erfindungsgemäßen Verfahrens und können daher den Vorteilen des Verfahrens entnommen werden. Unter anderem wird dabei durch die Begrenzung der Ausgabezeit eines Verbrauchsmittels sowie der Anzahl der Aktivierungen der Verbrauch auf ein anwendungsgerechtes Maß reduziert. Eine solche Spendevorrichtung mindert ferner die Verschmutzung von Räumlichkeiten, in denen sie eingesetzt werden, und reduziert ferner unangemessene Betriebs-, Reinigungs- und Wartungskosten.

Für die Spendevorrichtung zur Ausgabe eines Verbrauchsmittels kommt als Verbrauchsmittel bevorzugt ein Reinigungsmittel, ein Handwaschmittel oder ein Desinfektionsmittel zum Einsatz.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Spendevorrichtung mit Aktivierungseinheit gemäß einem ersten Ausführungsbeispiel des Standes der Technik,
- Figur 2: eine Spendevorrichtung mit Aktivierungseinheit gemäß einem zweiten Ausführungsbeispiel des Standes der Technik,
- Figur 3: eine Spendevorrichtung mit Aktivierungseinheit gemäß einem dritten Ausführungsbeispiels des Standes der Technik,
- Figur 4: ein Ablaufdiagramm des erfindungsgemäßen Verfahrens,
- Figur 5: eine erfindungsgemäße Spendevorrichtung gemäß einem ersten Ausführungsbeispiel,
- Figur 6: eine erfindungsgemäße Spendevorrichtung nach einem zweiten Ausführungsbeispiel.

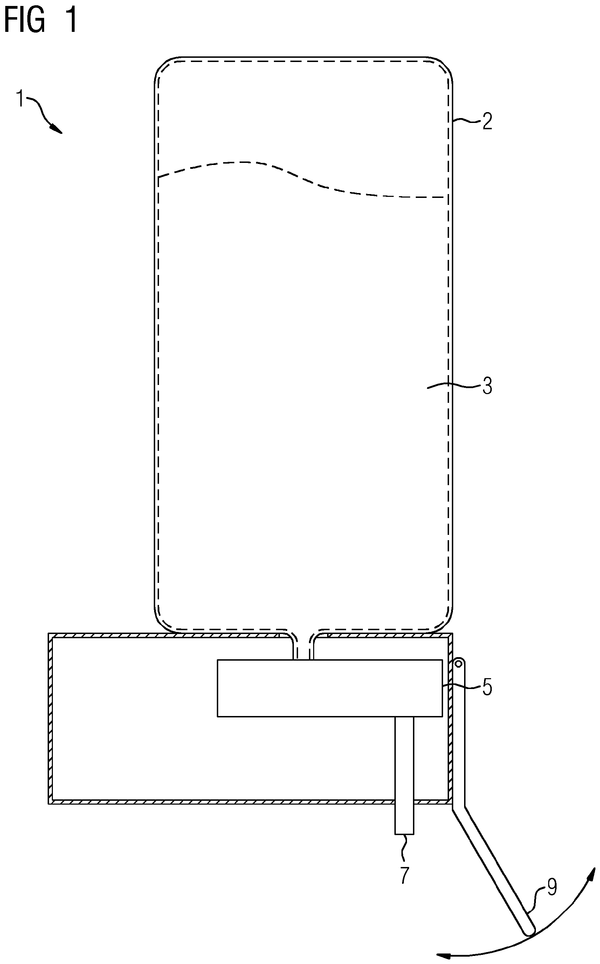

In der Figur 1 ist eine schematische Darstellung einer Spendevorrichtung 1 des Standes der Technik im Schnitt gezeigt. Die Spendevorrichtung 1 umfasst einen Behälter 2 mit einem darin befindlichen Verbrauchsmittel 3. Unterhalb des Behälters 2 angeordnet ist eine Pump- und Dosiereinheit 5, eine Ausgabestelle 7 sowie eine Aktivierungseinheit 9 zum Schwenken. Über die Aktivierungseinheit 9 betätigt ein Nutzer durch Schwenken die Pump- und Dosiereinheit 5, die daraufhin das Verbrauchsmittel 3 vom Behälter 2 über die Ausgabestelle 7 zum Nutzer befördert.

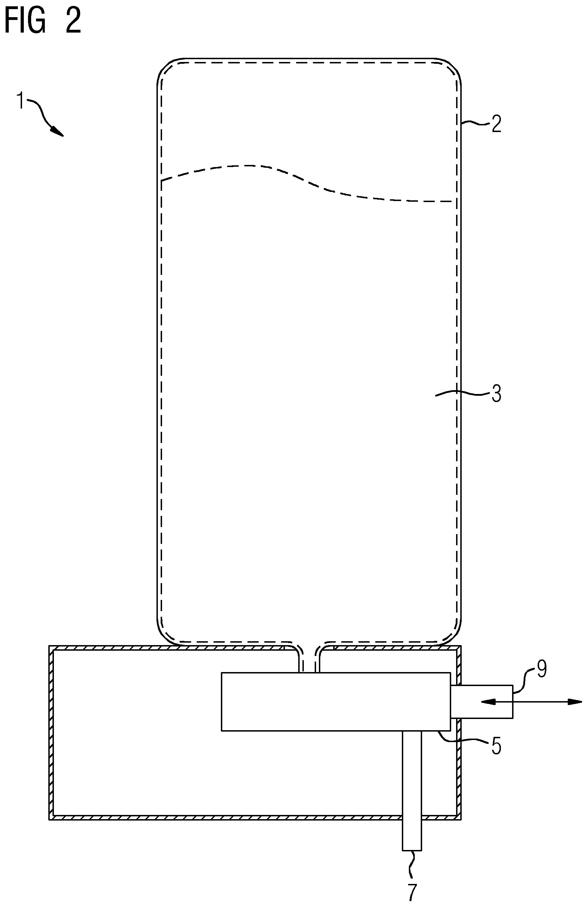

In der Figur 2 ist ebenfalls eine schematische Darstellung einer Spendevorrichtung 1 des Standes der Technik im Schnitt gezeigt. Gegenüber Figur 1 wird eine Aktivierungseinheit 9 zum Drücken bereitgestellt, die bei Aktivierung auf eine Pump- und Dosiereinheit 5 wirkt und analog zu Figur 1 das Verbrauchsmittel 3 vom Behälter 2 über die Ausgabestelle 7 zum Nutzer befördert.

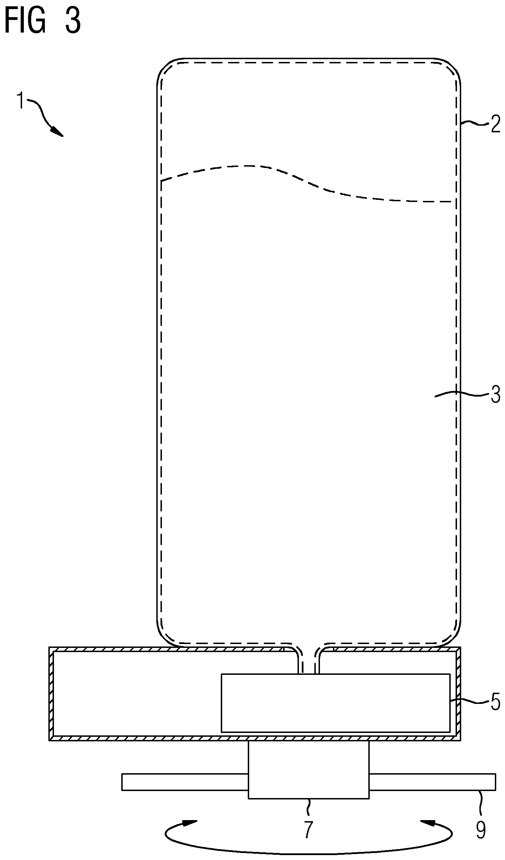

In der Figur 3 ist ebenfalls eine schematische Darstellung einer weiteren Ausführung einer Spendevorrichtung 1 des Standes der Technik im Schnitt gezeigt. Gegenüber den Figuren 1 und 2 wird eine Aktivierungseinheit 9 zum Drehen bereitgestellt, die bei Aktivierung auf eine Pump- und Dosiereinheit 5 wirkt und analog zu Figur 1 und Figur 2 das Verbrauchsmittel 3 vom Behälter 2 über die Ausgabestelle 7 zum Nutzer befördert.

Die Ausgabemenge des Verbrauchsmittels 3 bei allen drei Ausführungsbeispielen des Standes der Technik wird alleine durch den Nutzer bestimmt. Es erfolgt keinerlei Kontrolle über die entnommene Ausgabenmenge des Verbrauchsmittels 3. Daher kann es beispielsweise zur Entwendung oder zu einer überhöhten Ausgabemenge des Verbrauchsmittels 3 kommen. Negative Konsequenzen sind der daraus folgende erhöhte Verbrauch, das Entwenden von Verbrauchsmitteln 3 sowie die Verschmutzung der Räumlichkeiten. Die Folge sind daher unangemessene Betriebs-, Reinigungs- und Wartungskosten. Ferner kann der Komfort anderer Nutzer nachteilig gemindert werden.

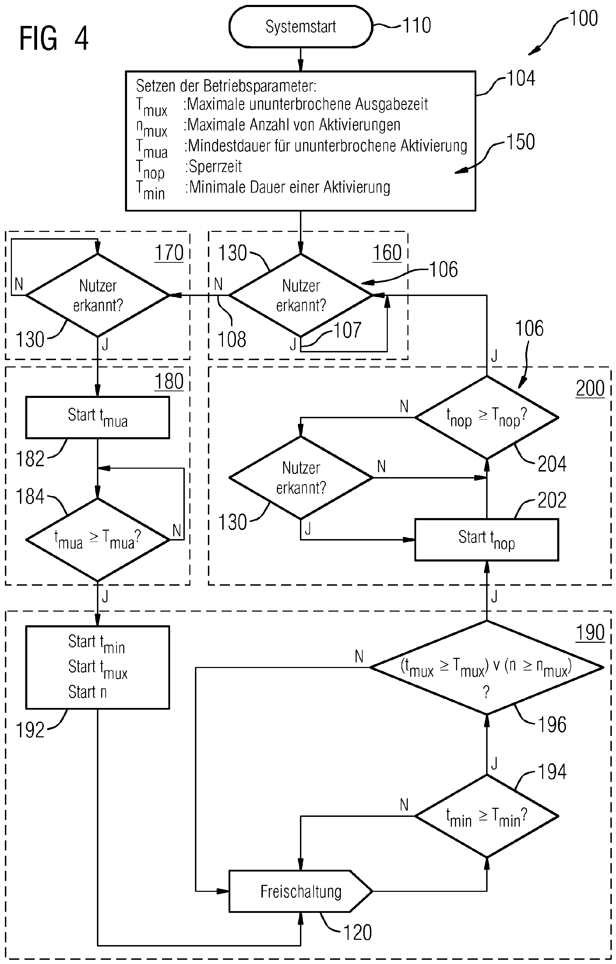

In der Figur 4 wird ein Ausführungsbeispiel eines erfindungsgemäßen Verfahrens zur Ausgabe eines Verbrauchsmittels 3 anhand eines Ablaufdiagramms 100 dargestellt. Durch rechteckige Elemente werden Operationen 104 dargestellt. Rauten symbolisieren Entscheidungen 106 bezüglich einer binären Abfrage mit zwei Ausgängen, wobei ein positiver Ausgang 107 mit J und ein negativer Ausgang 108 mit N angezeigt werden. Positiver Ausgang 107 bedeutet, dass die Antwort auf die Abfrage mit Ja beantwortet wird. Negativer Ausgang 108 bedeutet, dass die Abfrage mit Nein beantwortet wird. Wiederholt tritt ein Element zur Nutzererkennung 130 auf, das die Anwesenheit eines Nutzers prüft. In der Praxis kann eine Nutzererkennung 130 durch eine Überwachungseinheit 20 für den Aktivierungsbereich erfolgen, z.B. durch eine Überwachung per Kamera oder durch eine Lichtschranke. Aber auch weitere Formen der Nutzererkennung 130 sind hier anwendbar, zum Beispiel durch leichtes Drücken oder Berühren einer Aktivierungseinheit 9.

Das Verfahren kann beispielhaft mit einem Systemstart 110 beginnen. Es erfolgt eine Konfiguration 150 der Betriebsparameter. Als Betriebsparameter werden ein- oder bereitgestellt: eine maximale ununterbrochene Ausgabezeit Tₘᵤₓ, eine maximale Anzahl von Aktivierungen nₘᵤₓ, optional eine minimale Dauer einer Aktivierung Tₘᵢₙ, optional eine Mindestdauer einer ununterbrochenen Aktivierung Tₘᵤₐ und optional eine Sperrzeit der Ausgabe Tₙₒₚ.

Der Kern des Verfahrens besteht aus einer Freischalt- und Prüfeinheit 190. In der Freischalt- und Prüfeinheit 190 wird zunächst ein Element zur Messung von tₘᵢₙ, tₘᵤₓ und n 192 angesteuert, wobei tₘᵢₙ der gemessenen Dauer einer Aktivierung, tₘᵤₓ der gemessenen Dauer einer ununterbrochenen Ausgabezeit und n der gemessenen Anzahl der Aktivierungen entspricht. Die Messung von tₘᵢₙ ist hierbei optional. Zwischen der gemessenen Dauer einer Aktivierung tₘᵢₙ und der ununterbrochenen Ausgabezeit tₘᵤₓ wird unterschieden, da die Ausgabe gegenüber der Aktivierung beispielsweise durch Systemträgheit verzögert geschehen kann, das heißt es gibt einen zeitlichen Offset zwischen den Messgrößen tₘᵤₓ und tₘᵢₙ. Zum Start der Messungen von tₘᵢₙ. tₘᵤₓ und n 192 wird eine Freischaltung 120 zur Ausgabe des Verbrauchsmittels 3 erwirkt, das heißt der Nutzer kann das Verbrauchsmittel 3 erhalten. Währenddessen wird das Nutzerverhalten mittels einer Entscheidung für tₘᵤₓ und n, die Sperrbedingung 196, überprüft, den Kern des erfindungsgemäßen Verfahrens. Dabei wird geprüft, ob n≥nₘᵤₓ oder ob tₘᵤₓ≥Tₘᵤₓ, sprich ob die Anzahl der Aktivierungen n gleich oder größer ist als die vorgegebene maximale Anzahl von Aktivierungen nₘᵤₓ oder ob die gemessene Ausgabezeit tₘᵤₓ gleich oder größer ist als die vorgegebene maximale Ausgabezeit Tₘᵤₓ oder beides. Nur bei Erfüllung mindestens einer der beiden Abfragen, das heißt also falls (n≥nₘᵤₓ) ∨ (tₘᵤₓ≥Tₘᵤₓ), wobei ∨ für die nichtausschließende Disjunktion steht, wird der Nutzer gesperrt (Freischaltung 120 beendet). Alternativ kann man auch statt einer maximalen ununterbrochenen Ausgabezeit auch eine maximale Dauer einer Aktivierung als Betriebsparameter verwenden, da sich beide Zeiten nur durch einen Offset unterscheiden. Ferner kann man auch alternativ die Zahl der Aktivierung n innerhalb eines vorgegebenen Zeitintervalls bestimmen und mit einer maximalen Anzahl von Aktivierungen in diesem Zeitintervall vergleichen. Alternativ kann auch nur eine der beiden Sperrbedingungen verwendet werden. Bei Auswahl einer vorgegebenen maximalen ununterbrochenen Ausgabezeit Tₘᵤₓ als alleinige Oberschranke wird eine große Ausgabemenge des Verbrauchsmittels an einem Stück verhindert. Bei Auswahl einer vorgegebenen maximalen Anzahl von Aktivierungen nₘᵤₓ als alleinige Oberschranke wird dabei das zu häufige Aktivieren eines Nutzers verhindert. Alternativ kann die Sperrung der Ausgabe auch erst dann erfolgen, wenn sowohl die maximale Anzahl von Aktivierungen nₘᵤₓ als auch die maximale ununterbrochene Ausgabezeit Tₘᵤₓ erreicht bzw. überschritten wird. Die in der Erfindung bevorzugte Strategie zur Verhinderung von missbräuchlicher Bedienung wird daher dadurch erzielt, wenn als Kriterium zum Sperren verwendet wird, dass mindestens eine der beiden Sperrbedingungen 196 erfüllt sein muss, wodurch ein maximaler Schutz entsteht und ein einfaches Umgehen der Sperrung am effektivsten vermieden wird.
Optional kann vor der Prüfung der Sperrbedingung 196 mittels einer Entscheidung für tₘᵢₙ 194 die Abfrage tₘᵢₙ≥Tₘᵢₙ geprüft werden, sprich ob die gemessene Dauer einer Aktivierung tₘᵢₙ gleich oder größer ist als eine minimale Dauer einer Aktivierung Tₘᵢₙ. Dadurch wird der Situation Rechnung getragen, dass es erst ab einer gewissen Dauer einer Aktivierung durch Systemträgheit zu einer effektiven Ausgabe des Verbrauchsmittels 3 an den Nutzer kommen kann. Dabei ist Tₘᵢₙ vorzugsweise gleich oder größer als der oben erwähnte zeitliche Offset zu wählen. In diesem Ausführungsbeispiel wird nur bei Erfüllung der Entscheidung für tₘᵢₙ 194, das heißt bei Überschreiten der Mindestdauer einer Aktivierung die oben beschriebene Prüfung der Sperrbedingung 196 angesteuert.

Bei Erfüllung der Sperrbedingung 196 kann eine Blockiereinheit 200 durchlaufen werden. Die Blockiereinheit 200 besteht aus einer eine Messung für tₙₒₚ 202, eine gemessene Sperrzeit der Ausgabe des Verbrauchsmittels 3. Im Folgenden wird durch ein Entscheidung für tₙₒₚ 204 geprüft, ob die gemessene Sperrzeit der Ausgabe tₙₒₚ gleich oder größer ist als die vorgegebene Sperrzeit der Ausgabe Tₙₒₚ, sprich ob tₙₒₚ≥Tₙₒₚ. In diesem Fall kann das Verfahren zyklisch beispielsweise an die Freischalt- und Prüfeinheit 190 zurückgeführt werden und es kann gemäß des Ablaufdiagramms 100 wieder zu einer Freischaltung 120 zur Ausgabe des Verbrauchsmittels 3 folgen. Bei noch nicht erreichter vorgegebener Sperrzeit der Ausgabe kann optional eine Nutzererkennung 130 angesteuert werden. Falls die Nutzererkennung 130 dabei einen Nutzer erkennt, kann dann die gemessene Sperrzeit der Ausgabe tₙₒₚ wieder von vorne gestartet werden, das heißt der Nutzer dadurch effektiv länger gesperrt werden. Falls kein Nutzer erkannt wird, dann wird die gemessene Sperrzeit der Ausgabe tₙₒₚ weiterlaufen gelassen, bis die Sperrzeit der Ausgabe Tₙₒₚ erreicht bzw. überschritten ist. Die zwischengeschaltete Nutzererkennung 130 kann dabei eine lange Blockierung eines Nutzers über die Sperrzeit der Ausgabe Tₙₒₚ hinaus ermöglichen.

Vor der Freischalt- und Prüfeinheit 190 kann ferner eine Identifikationseinheit 180 angesteuert werden. Die Identifikationseinheit 180 kann ein Element zur Messung für tₘᵤₐ 182 umfassen, die Dauer für eine ununterbrochene Aktivierung. In einer folgenden Entscheidung für tₘᵤₐ 184 kann geprüft werden, ob tₘᵤₐ≥Tₘᵤₐ, sprich ob die gemessene Zeit tₘᵤₐ gleich oder größer ist als die vorgegebene Mindestdauer einer ununterbrochenen Aktivierung Tₘᵤₐ. Bei Erfüllung dieses Kriteriums wird entsprechend zu der beschriebenen Freischalt- und Prüfeinheit 190 weitergeleitet, sonst wird die Entscheidung für tₘᵤₐ 184 erneut angesteuert. Durch die Verwendung der beschriebenen Identifikationseinheit 180 kann einer Fehlbedienung vorgebeugt werden, die zum Beispiel durch ein kurzes Aktivieren eines Insekts ausgelöst werden kann und zu einer unerwünschten Ausgabe führen könnte.

Zusätzlich kann zwischen Konfiguration 150 und Identifikationseinheit 180 eine Initialisierung 160 erfolgen und/oder eine Nutzerwarteeinheit 170 angesteuert werden. Die Initialisierung 160 ist hier beispielhaft mittels eines Elements zur Nutzererkennung 130 ausgeführt. Nur bei negativem Ausgang, das heißt bei Nichterkennung eines Nutzers kann ferner zu einer Nutzerwarteeinheit 170 weitergeleitet, sonst wird weiterhin die Initialisierung 160 angesteuert. Typischerweise wird nach Einstellung der Parameter kein Nutzer erkannt, so dass die Initialisierung 160 nahezu verzögerungsfrei zu der Nutzerwarteeinheit 170 weiterleitet. Eine solche Initialisierung 160 verhindert beispielsweise einen Beginn des Verfahrens, falls sich beispielsweise ein Schmutzfilm auf der Überwachungseinheit 20 befindet und beispielhaft zu einer fehlerhaften Nutzererkennung 130 führt. Die Nutzerwarteeinheit 170 umfasst beispielhaft eine Nutzererkennung 130, die, sobald ein Nutzer erkannt wird, zu der oben beschriebenen optionalen Identifikationseinheit 180 oder der Freischalt- und Prüfeinheit 190 weiterschaltet, ansonsten wird weiter gewartet.

Ein zyklisches Zurückführen des Verfahrens von der Blockiereinheit 200 aus kann je nach Ausführungsform an die Initialisierung 160, die Nutzerwarteeinheit 170, die Identifikationseinheit 180 oder die Freischalt- und Prüfeinheit 190 erfolgen.

Das erfindungsgemäße Verfahren kontrolliert vorteilhafterweise das Nutzerverhalten an der Spendevorrichtung 1. Das jedem Nutzer zustehende anwendergerechtes Maß an Verbrauchsmitteln 3 wird dabei durch die maximale Anzahl von Aktivierungen und eine maximale ununterbrochene Ausgabezeit begrenzt, wobei bei Erreichen bzw. Überschreiten mindestens einer dieser beiden Grenzwerte die Ausgabe des Verbrauchsmittels blockiert wird. Dadurch wird effektiv eine missbräuchliche Bedienung eines Nutzers der Spendevorrichtung 1 erkannt und als Folge die Nutzung gesperrt bzw. eingeschränkt. Ferner können optional auch Fehlbedienungen erkannt oder berücksichtigt werden, dass zu kurze Aktivierungen nicht notwendigerweise zu einer realen Ausgabe des Verbrauchsmittels führen. Das Verfahren mindert dadurch Betriebs-, Reinigungs- und Wartungskosten.

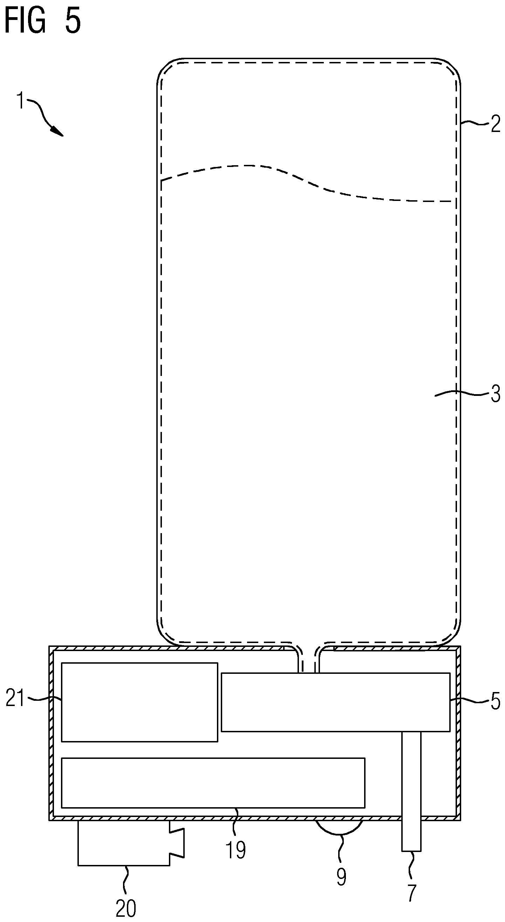

In der Figur 5 wird eine erfindungsgemäße Spendevorrichtung 1 zur Ausgabe eines Verbrauchsmittels 3 nach einem ersten Ausführungsbeispiel gezeigt. Die Spendevorrichtung 1 umfasst einen mit Verbrauchsmittel 3 befüllten Behälter 2. Anschließend unterhalb des Behälters 2 befindet sich eine Auswertungseinheit 19, die nach dem in Figur 4 beschriebenen Verfahren programmiert ist. Zusätzliche kann beispielsweise der Raum unterhalb der Auswertungseinheit 19 mittels einer Überwachungseinheit 20 überwacht werden, wodurch eine Nutzererkennung 130 durchführbar ist. Eine Überwachungseinheit 20 kann beispielsweise eine Kamera oder eine Lichtschranke sein. Die Betätigungseinheit 9 ist hierbei als ein Sensor ausgeführt, so dass die Aktivierung kontaktfrei ablaufen kann. Durch Aktivierung eines Nutzers mittels Sensor wird in diesem Ausführungsbeispiel ein Antrieb 21 angesteuert, der wiederum eine Pump- und Dosiereinheit 5 zum Abpumpen des Verbrauchsmittels 3 über die Ausgabestelle 7 betreibt. Der Antrieb 21 der Pump- und Dosiereinheit 5 erfolgt nach den Regeln des erfindungsmäßen Verfahrens gesteuert durch die Auswertungseinheit 19. Die hierbei beschriebene Spendevorrichtung 1 arbeitet vollautomatisch und kontaktfrei. Die hier beschriebene erfindungsgemäße Spendevorrichtung 1 weist zudem alle Vorteile des erfindungsgemäßen Verfahrens auf.

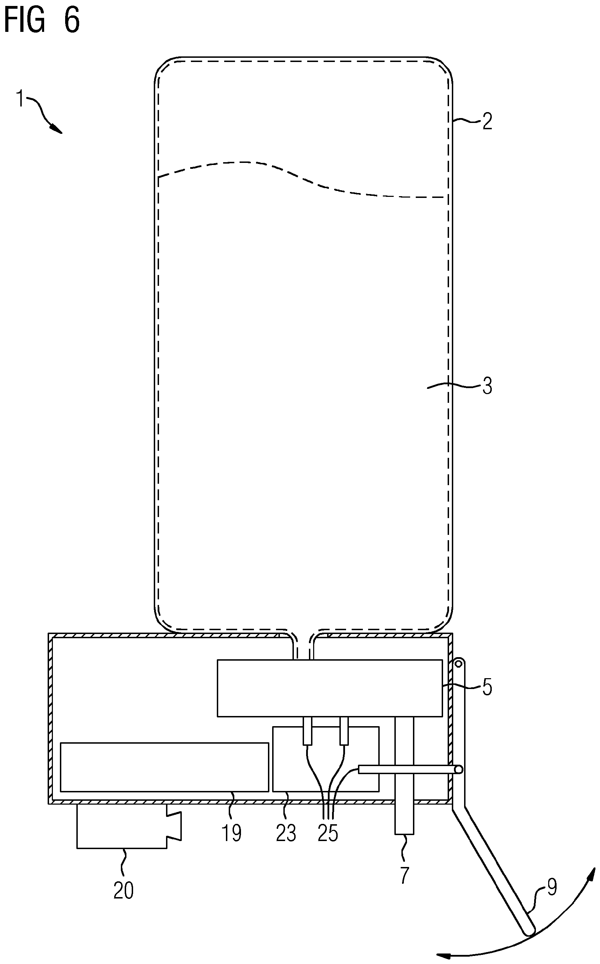

In der Figur 6 wird eine weitere erfindungsgemäße Spendevorrichtung 1 nach einem weiteren Ausführungsbeispiel gezeigt. Dabei wird wie in Figur 5 ein Behälter 2 mit einem darin befindlichen Verbrauchsmittel 3 zur Verfügung gestellt. Anschließend unterhalb des Behälters 2 befindet sich eine nach dem erfindungsgemäßen Verfahren arbeitende Auswertungseinheit 19. Zusätzliche kann beispielsweise wie in Figur 5 der Raum unterhalb der Auswertungseinheit 19 mittels einer Überwachungseinheit 20 überwacht werden, wodurch eine Nutzererkennung 130 durchführbar ist. Eine Überwachungseinheit 20 kann beispielsweise eine Kamera oder eine Lichtschranke sein. Die Aktivierung durch den Nutzer erfolgt hierbei beispielhaft über eine mechanische Betätigungseinheit 9 zum Drücken. Alternativ können hierbei auch andere mechanische Betätigungseinheit 9 dem Stand der Technik entnommen werden, siehe dazu die Figuren 1-3. Die Auswertungseinheit 19 steuert dabei nach dem erfindungsgemäßen Verfahren eine Kupplungseinheit 23, die bei Freischaltung 120 mittels mechanischer Verbindungselemente 25 einen Kraftschluss zwischen Aktivierungseinheit 9 und Pump- und Dosiereinheit 5 herstellt, wodurch eine Ausgabe des Verbrauchsmittels 3 über die Ausgabestelle 7 gewährleistet wird. Hierbei sind auch weitere Verbindungsformen zwischen Aktivierungseinheit 9 und Pump- und Dosiereinheit 5 anwendbar. Die hier beschriebene erfindungsgemäße Spendevorrichtung 1 weist zudem alle Vorteile des erfindungsgemäßen Verfahrens auf.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, wie in den beigefügten Ansprüchen definiert, ohne den Schutzumfang der Erfindung zu verlassen.

## Patentansprüche

1. Verfahren zur Ausgabe eines Verbrauchsmittels (3) aus einer Spendevorrichtung (1), umfassend folgende Schritte:
- Betätigen einer Aktivierungseinheit (9);
- Freischalten einer Ausgabe;
- Messen einer Anzahl von Aktivierungen;
- Messen einer Dauer von ununterbrochenen Ausgabezeiten;
- Sperren der Ausgabe eines Verbrauchsmittels (3), falls mindestens eine der folgenden Sperrbedingungen (196) erfüllt ist:
i) die gemessene Dauer einer ununterbrochenen Ausgabezeit tₘᵤₓ ist gleich oder größer als eine vorgegebene maximale ununterbrochene Ausgabezeit Tₘᵤₓ (tₘᵤₓ≥Tₘᵤₓ),
ii) die gemessene Anzahl der Aktivierungen n ist gleich oder größer als eine vorgegeben maximale Anzahl von Aktivierungen nₘᵤₓ (n≥nₘᵤₓ),
**dadurch gekennzeichnet, dass**
die Freischaltung (120) der Ausgabe eines Verbrauchsmittels (3) nur dann erfolgt, falls eine gemessene Dauer für eine ununterbrochene Aktivierung tₘᵤₐ größer ist als eine vorgegebene Mindestdauer einer ununterbrochenen Aktivierung Tₘᵤₐ (tₘᵤₐ≥Tₘᵤₐ).

2. Verfahren nach Anspruch 1,
wobei die Sperrung der Ausgabe beendet wird, falls eine gemessene Sperrzeit der Ausgabe tₙₒₚ gleich oder größer ist als eine vorgegebene Sperrzeit der Ausgabe Tₙₒₚ (tₙₒₚ≥Tₙₒₚ).

3. Verfahren nach einem der vorigen Ansprüche,
wobei die Freischaltung (120) der Ausgabe des Verbrauchsmittels (3) nur dann beendet wird, falls zusätzlich zu den Sperrbedingungen (196) eine gemessene Dauer einer Aktivierung tₘᵢₙ gleich oder größer ist als vorgegebene minimale Dauer einer Aktivierung Tₘᵢₙ (tₘᵢₙ≥Tₘᵢₙ).

4. Verfahren nach einem der vorigen Ansprüche 2 oder 3,
wobei während der Sperrung der Ausgabe eine Nutzererkennung (130) die Nutzeranwesenheit prüft und im Falle einer Erkennung die gemessene Sperrzeit der Ausgabe tₙₒₚ wieder auf null gesetzt wird.

5. Verfahren nach einem der vorigen Ansprüche 2 bis 4,
wobei die Sperrzeit der Ausgabe Tₙₒₚ im Bereich von 1-100 s eingestellt wird.

6. Verfahren nach einem der vorigen Ansprüche,
wobei die maximale ununterbrochene Ausgabezeit Tₘᵤₓ im Bereich von 0,5-5 s eingestellt und/oder die maximale Zahl der Aktivierungen nₘᵤₓ im Bereich von 3-10 liegt.

7. Verfahren nach einem der vorigen Ansprüche,
wobei bei Freischaltung (120) ein Antrieb (21) für eine Pump- und Dosiereinheit (5) zur Ausgabe des Verbrauchsmittels (3) über eine Ausgabestelle (7) eingeschaltet wird und bei Sperrung abgeschaltet wird.

8. Verfahren nach einem der vorigen Ansprüche 1 bis 6,
wobei die Aktivierungseinheit (9) durch eine mechanische Aktivierungseinheit (9) realisiert wird und durch die Freischaltung (120) eine kraftschlüssige Verbindung zwischen der mechanischer Aktivierungseinheit (9) und einer Pump- und Dosiereinheit (5) zur Ausgabe des Verbrauchsmittels (3) über eine Ausgabestelle (7) hergestellt wird, die bei Sperrung wieder gelöst wird.

9. Verfahren nach einem der Ansprüche 1 bis 6 oder 8,
wobei die Aktivierungseinheit (9) als eine mechanische Aktivierungseinheit (9) realisiert wird und bei Sperrung ein Blockieren der mechanischen Aktivierungseinheit (9) erfolgt.

10. Spendevorrichtung (1) zur Ausgabe eines Verbrauchsmittels (3) umfassend:
- einen Behälter (2) mit einem darin befindlichen Verbrauchsmittel (3);
- eine Aktivierungseinheit (9);
- eine Ausgabestelle (7), über die das Verbrauchsmittel (3) abgegeben wird;
- eine Pump- und Dosiereinheit (5), die das Verbrauchsmittel (3) aus dem Behälter (2) über die Ausgabestelle (7) zum Verbraucher befördert;
**dadurch gekennzeichnet, dass** die Spendevorrichtung eine nach einem der Ansprüche 1 bis 10 verfahrende elektronische Auswertungseinheit (19) aufweist, die zur Besteuerung der Pump- und Dosiereinheit (5) zur Verfügung gestellt wird.

11. Spendevorrichtung (1) zur Ausgabe eines Verbrauchsmittels (3) nach Anspruch 10,
wobei das Verbrauchsmittel (3) ein Reinigungsmittel, ein Handwaschmittel oder ein Desinfektionsmittel ist.

## Claims

1. Method for dispensing a consumable (3) from a dispensing device (1), comprising the following steps:
- actuating an activation unit (9);
- enabling dispensing;
- measuring a number of activations;
- measuring a duration of uninterrupted dispensing times;
- inhibiting the dispensing of a consumable (3) if at least one of the following inhibition conditions (196) is satisfied:
i) the measured duration of an uninterrupted dispensing time tₘᵤₓ is equal to or greater than a predefined maximum uninterrupted dispensing time Tₘᵤₓ (tₘᵤₓ ≥ Tₘᵤₓ),
ii) the measured number of activations n is equal to or greater than a predefined maximum number of activations nₘᵤₓ (n ≥ nₘᵤₓ),
**characterized in that**
the dispensing of a consumable (3) is enabled (120) only if a measured duration for an uninterrupted activation tₘᵤₐ is greater than a predefined minimum duration of an uninterrupted activation Tₘᵤₐ (tₘᵤₐ ≥ Tₘᵤₐ).

2. Method according to Claim 1,
wherein the inhibition of the dispensing is terminated if a measured inhibition time of the dispensing tₙₒₚ is equal to or greater than a predefined inhibition time of the dispensing Tₙₒₚ (tₙₒₚ ≥ Tₙₒₚ).

3. Method according to one of the preceding claims,
wherein the enabling (120) of the dispensing of the consumable (3) is terminated only if, in addition to the inhibition conditions (196), a measured duration of an activation tₘᵢₙ is equal to or greater than a predefined minimum duration of an activation Tₘᵢₙ (tₘᵢₙ ≥ Tₘᵢₙ).

4. Method according to one of the preceding Claims 2 or 3,
wherein during the inhibition of the dispensing, a user detection (130) checks the presence of a user and, in the event of a detection, the measured inhibition time of the dispensing tₙₒₚ is set to zero again.

5. Method according to one of the preceding Claims 2 to 4,
wherein the inhibition time of the dispensing Tₙₒₚ is set in the range from 1-100 s.

6. Method according to one of the preceding claims,
wherein the maximum uninterrupted dispensing time Tₘᵤₓ is set in the range from 0.5-5 s and/or the maximum number of activations nₘᵤₓ lies in the range from 3-10.

7. Method according to one of the preceding claims,
wherein, upon being enabled (120), a drive (21) for a pumping and metering unit (5) for dispensing the consumable (3) is switched on via an output point (7) and is switched off when inhibited.

8. Method according to one of the preceding Claims 1 to 6,
wherein the activation unit (9) is implemented by a mechanical activation unit (9) and upon being enabled (120), a force-fitting connection is produced between the mechanical activation unit (9) and a pumping and metering unit (5) for dispensing the consumable (3) via an output point (7) and is released again when inhibited.

9. Method according to one of Claims 1 to 6 or 8,
wherein the activation unit (9) is implemented as a mechanical activation unit (9) and, when inhibited, the mechanical activation unit (9) is inhibited.

10. Dispensing device (1) for dispensing a consumable (3), comprising:
- a container (2) with a consumable (3) located therein;
- an activation unit (9);
- an output point (7), via which the consumable (3) is dispensed;
- a pumping and metering unit (5), which delivers the consumable (3) out of the container (2) to the user via the output point (7);
**characterized in that** the dispensing device has an electronic evaluation unit (19) moving according to one of Claims 1 to 10, which is provided for controlling the pumping and metering unit (5) .

11. Dispensing device (1) for dispensing a consumable (3) according to Claim 10,
wherein the consumable (3) is a cleaning agent, a hand-washing agent or a disinfectant.

## Revendications

1. Procédé pour faire sortir un produit (3) consommable d'un dispositif (1) de distribution, comprenant les stades suivants :
- actionnement d'une unité (9) d'activation ;
- libération d'une sortie ;
- mesures d'un nombre d'activations ;
- mesures d'une durée de temps de sortie ininterrompus ;
- arrêt de la sortie d'un produit (3) consommable, si au moins l'une des conditions (196) suivantes est satisfaite :
(i) la durée mesurée d'un temps tₘᵤₓ de sortie ininterrompu est supérieure ou égale à un temps Tₘᵤₓ (tₘᵤₓ≥Tₘᵤₓ) de sortie ininterrompu maximum donné à l'avance,
(ii) le nombre mesuré des activations n est supérieur ou égal à un nombre maximum donné à l'avance d'activations nₘᵤₓ (n≥nₘᵤₓ),
**caractérisé en ce que** la libération (120) de la sortie d'un produit (3) consommable n'a lieu que si une durée mesurée d'une activation tₘᵤₐ ininterrompue est plus grande qu'une durée minimum donnée à l'avance d'une activation Tₘᵤₐ (tₘᵤₐ≥Tₘᵤₐ) ininterrompue.

2. Procédé suivant la revendication 1,
dans lequel on met fin à l'arrêt de la sortie, si un temps d'arrêt mesuré de la sortie tₙₒₚ est supérieur ou égal à un temps d'arrêt donné à l'avance de la sortie Tₙₒₚ (tₙₒₚ≥Tₙₒₚ).

3. Procédé suivant l'une des revendications précédentes,
dans lequel on ne met fin à la libération (120) de la sortie du produit (3) consommable que si, en plus des conditions (196) d'arrêt, une durée mesurée d'une activation tₘᵢₙ est supérieure ou égale à une durée minimum donnée à l'avance d'une activation Tₘᵢₙ (tₘᵢₙ≥Tₘᵢₙ).

4. Procédé suivant l'une des revendications 2 ou 3 précédentes,
dans lequel, pendant l'arrêt de la sortie, une reconnaissance (130) d'utilisateur contrôle la présence d'un utilisateur et, dans le cas d'une reconnaissance, le temps d'arrêt mesuré de la sortie tₙₒₚ est remis à zéro.

5. Procédé suivant l'une des revendications 2 à 4 précédentes,
dans lequel on règle le temps d'arrêt de la sortie Tₙₒₚ dans la plage de 1 à 100 s.

6. Procédé suivant l'une des revendications précédentes,
dans lequel on règle le temps Tₘᵤₓ de sortie ininterrompu maximum dans la plage de 0,5 à 5 s et/ou le nombre maximum des activations nₘᵤₓ est dans la plage de 3 à 10.

7. Procédé suivant l'une des revendications précédentes,
dans lequel, lors de la libération (120), on met en circuit un entraînement (21) d'une pompe et d'une unité (5) doseuse pour faire sortir le produit (3) consommable par un point (7) de sortie et, lors de l'arrêt, on le met hors circuit.

8. Procédé suivant l'une des revendications 1 à 6 précédentes,
dans lequel on réalise l'unité (9) d'activation par une unité (9) d'activation mécanique et on produit, par la libération (120), une liaison à coopération de force entre l'unité (9) d'activation mécanique et une unité (5) de pompage et de dosage pour la sortie du produit (3) consommable par un point (7) de sortie, que l'on redéfait lors de l'arrêt.

9. Procédé suivant l'une des revendications 1 à 6 ou 8,
dans lequel on réalise l'unité (9) d'activation sous la forme d'une unité (9) d'activation mécanique et, lors de l'arrêt, il se produit un blocage de l'unité (9) d'activation mécanique.

10. Dispositif (1) de distribution pour faire sortir un produit (3) consommable, comprenant :
- un récipient (2), dans lequel se trouve du produit (3) consommable ;
- une unité (9) d'activation ;
- un point (7) de sortie, par lequel on fait sortir le produit (3) consommable ;
- une unité (5) de pompage et de dosage, qui véhicule le produit (3) consommable du récipient (2) au consommateur, en passant par le point (7) de sortie ;
**caractérisé en ce que** le dispositif de distribution a une unité (19) électronique d'exploitation procédant suivant l'une des revendications 1 à 10, qui est mise à disposition pour commander l'unité (5) de pompage et de dosage.

11. Dispositif (1) de distribution pour faire sortie un produit (3) consommable suivant la revendication 10,
dans lequel le produit (3) consommable est un produit de nettoyage, une lessive à main ou un désinfectant.
